Europäisches Patentamt

European Patent Office

Office européen des brevets

(19)

(11) Publication number: **0 012 420**
**B1**

(12) **EUROPEAN PATENT SPECIFICATION**

(45) Date of publication of patent specification: **21.03.84**

(51) Int. Cl.³: **G 09 G 3/34, H 04 N 9/00**

(21) Application number: **79105059.4**

(22) Date of filing: **10.12.79**

(54) Methods of operating display devices and apparatus for performing the methods.

(30) Priority: **18.12.78 US 970598**

(43) Date of publication of application:
**25.06.80 Bulletin 80/13**

(45) Publication of the grant of the patent:
**21.03.84 Bulletin 84/12**

(84) Designated Contracting States:
**DE FR GB IT**

(56) References cited:

IFIP CONGRESS SERIES, vol. 7, Information
Processing 1977, Toronto, August 8-12, 1977;
North-Holland Publishing Company
(Amsterdam, New York, Oxford) E. CARLSON,
G. GIDDINGS, R. WILLIAMS: "Multiple colors
and image mixing in graphic terminals", pages
179-182

(73) Proprietor: **International Business Machines
Corporation
Old Orchard Road
Armonk, N.Y. 10504 (US)**

(72) Inventor: **Langdon, Glen George
6772 Hampton Drive
San Jose, California 95120 (US)**
Inventor: **Mantey, Patrick Edward
22316 Citation Drive
Los Gatos, California 95030 (US)**

(74) Representative: **Lewis, Alan John
IBM United Kingdom Patent Operations Hursley
Park
Winchester, Hants, SO21 2JN (GB)**

Courier Press, Leamington Spa, England.

Methods of operating display devices and apparatus for performing the methods

This invention relates to electrical graphics display systems, and is more particularly concerned with such systems comprising electrochromic display devices.

Electrochromic display devices and materials for use therein are disclosed for example in UK specification Nos. 1,376,799; 1,488,538 and 1,513,999 and US specification Nos. 3,864,589 and 4,167,308.

The display device providing an example of an electrochromic display device (as that term has been used hereinbefore) described in UK specification Nos. 1,376,799 (Philips) comprises image display cells which satisfy the following requirements:

a) The image display cell contains a substance which on reacting at an electrode under an applied voltage at the image forming electrode is converted from a colourless form into a coloured form said coloured form being substantially insoluble in the cell liquid thereby preventing it from disappearing from the image forming electrode by diffusion.

b) The substance in its colourless form is well soluble in the cell liquid so that an effective amount of coloured substance is formed at the image forming electrode. This requirement is of great importance with respect to the speed at which an image can be produced. In the case of a colourless substance with a low solubility the speed at which the substance diffuses to the image electrode determines the rate of response of the cell.

c) The insoluble coloured substance adheres to the electrode at which it is formed. It is not sufficient for the coloured substance to be simply insoluble in the cell liquid if an image display is required. In general, insoluble substances participate and collect on the bottom of the vessel containing it and image display cells of this type only have a decoloured image electrode.

d) The coloured substance is not decoloured by reaction with the substance formed at the other electrode (the counter electrode). Hence the latter substance either must adhere to the electrode at which it is formed or it must belong to the same redox pair as the coloured substance.

The cells described have a transparent wall portion and comprise a reducible redox substance and an oxidizable redox substance in an electrochemically inert liquid which is in contact with at least two inert electrodes. The Philips inert liquid is water and the two redox substance have specific stated compositions.

UK specification No. 1,488,538 (IBM/Shepherd relates to refresher circuitry for a device which provides a transient display. The most common display device of this kind is cited in the specification to be the cathode-ray tube (CRT) display device and the Shepherd invention is described applied both to a mono and a colour CRT display device. The CRT display device described in the Shepherd specification is an example of an electrochromic display device as that term has been used hereinbefore.

UK specification No. 1,513,999 relates to electrochromic display devices which are stated to be, for the purposes of that specification, devices which operate to produce a display by the electrochemically reversible deposition of coloured species on selected display electrodes. Such a device is another example of an electrochromic display device as that term has been used hereinbefore.

The example of an electrochromic display device described in US specification No. 3,864,589 (Philips) is a picture display device comprising between two supporting plates of which at least one is transparent, a solution of a material which is reversibly reducible and oxidizable by means of an electric current. The solution is in contact with at least two electrodes and selective passages of current between the electrodes causes a display.

For the purposes of US specification No. 4,167,308 an electrochromic display device is stated to be a device wherein the display effect is achieved as a consequence of a redox reactor caused by the passage of charge between a display electrode and a counter electrode both in contact with a suitable electrolyte.

Hereinafter the term "electrochromic display device" is used with a more restricted meaning than hereinbefore and, hereinafter and in the claims, is defined to mean a CRT display device having an electrochromic surface, that is a surface capable of being illuminated by an electron gun. Such a CRT display device is hereinafter referred to as "a CRT display device as herein defined". Of the foregoing examples of electrochromic display devices only UK specification No. 1,488,538 (IBM/Shepherd) describes examples of a CRT display device as herein defined.

The prior art is replete with raster scanned graphics systems emphasizing diverse electro optical colour properties. US specification No. 3,961,365 shows a map of segmented display areas and a table indicating a one out of n degrees of brightness associated with each segment. This provides a varying brightness control when a colour display is imaged upon a large surface suitable for audience viewing. US specification No. 3,843,959 shows a system in which each discrete display area can exhibit adjacent pels of dissimilar luminosity.

Contemporary colour graphics terminals select colours from an electronic TV equivalent of a multi colour palette with a conversion algorithm permitting the use of hue, brightness, and a method for specifying colour. In some systems up to eight colours may be displayed at once when selected from the palette.

In an article entitled "Multiple colours and image mixing in graphic terminals" by Carlson et al, appearing at pages 179—182 of the publication IFIP Congress Series, Vol. 7, Information Processing 1977, Toronto, August 8—12 1977, a project being carried out by the Applicant company on graphic terminals is described. The article includes a description of a graphics terminal comprising a host 360/370 data processing system working with a minicomputer. For display purposes the minicomputer supplies an input signal pattern to a display processor comprising a vector generator and a character generator for generating lines or characters in the form of bit patterns. The bit patterns are stored in a refresher memory which provides display data to a colour raster scan display device. The processor repeatedly cycles through the refresher memory to paint the stored display onto the screen of the display device.

To provide a more flexible colour specification, the output of the refresher memory is used to address a video Look-Up Table (VLT) containing 12 bit display control words that contain the actual colour and/or intensity specifications or values. The 12 bits comprise three groups of four bits, the groups corresponding to green, red, blue and the bits defining the intensity. Although the VLT allows a substantially increased number of colour/intensity specifications to be obtained, the same input to the carbon refresher memory will produce the same output colour intensity specification. There is no flexibility. Consequently the system displays solid objects, such as polygons or filled circles, as contiguous pels of the same colour/intensity specification. This technique provides only for flat textureless colours.

It is an object of this invention to devise a method and means of creating the display illusion of "roughness" or "texture" in colour patterns for an electrochromic display surface. It is a related object to devise a method and means for generating visually improved lines, characters, and coloured areas under the auspices of a single colour number assignment or selection by a user. It is yet another object to minimize the utilization of CPU resources ordinarily driving a raster colour graphics system. It is a complementary object that the method and means so devised permit more real colours to be simultaneously displayed than there are colour number combinations in said refresh buffer.

Satisfaction of the foregoing objects is premised on the unexpected observation that the real colour value for each pel may be derived as a joint function of the colour number stored in the refresh buffer of the display for any given pel position and the value of any subset of the address bits which describe that pel position. In turn, this observation is embodied in a method and means for creating the illusion of roughness or texture in colour patterns for an electrochromic display surface by positioning pels of different colour values in adjacent positions and then replicating the patterns automatically. The texture effect is achieved when colour values are combined with the lowest order address bits of the pel position. If, for example, the highest order x (horizontal) and y (vertical) pel address bits are used, then the viewing surface is divided into four quadrants, each having its own selection of real colours. More particularly, the method steps of one embodiment of the invention comprise (1) assigning a colour number k for each pattern to be displayed; (2) creating a table associating the colour value v for the $i = 0, 1, \ldots, m - 1; j = 0, 1, \ldots, m - 1$ pel position in the mxn pel array of the pattern having the address k, i, j; (3) displaying the colour value v on the surface; and (4) accessing the table at the address $k, i, j + 1$ in order to obtain the colour value v' at the next successive display position $i, j + 1$.

Advantageously, texture information may be combined with the colour number in a variety of ways. In one apparatus embodiment of the invention, texture information is written into the refresh buffer itself. This may be implemented by incorporating address bit subset controlled "texture information" into the "colour number" *prior* to insertion of the so modified colour number into the invention, the colour number from the refresh buffer together with a reselected subset of address bits defining the pel position and implied texture information when taken together, can be used to define an address in a Look-Up Table for extracting the real colour value. In yet another apparatus embodiment of the invention, means for selecting the transformations and for incorporating and utilizing complex texture information can be simplified if they are executable in a two level pattern hierarchy of subpattern and superpattern selection.

In accordance with the foregoing, the invention provides a method of forming a colour display of an original on the display surface of a CRT display device as herein defined, said method comprising sequentially accessing a refresher memory storing data representing the original and applying the output of the memory to address means for accessing a stored array of display control words representing different colours and colour intensities and usable to control the display device, characterised by forming the addresses of the control words by combining at least part of the address of the respective display area pel with the data applied to the address means representing the corresponding original pel so that the selected control word depends both on the colour of the original pel and the position display area pel whereby the display has the appearance of texture or roughness rather than flat colour uniformity.

The invention further provides apparatus capable of carrying out a method as aforesaid, said apparatus comprising a CRT display device, an electrochromic display as herein defined controlled in operation by a sequence of display control words, each word determining the colour and intensity of a displayed pel; a refresher memory for storing data representing the pel's of the original; means for reading out the pel data; a store for storing an array of the display control words; and means for accessing control words from the store and for supplying the accessed control words to the display device, characterised in that the accessing means comprise means for combining the original pel data read out from the refresher memory with address data representing at least part of the address of the display pel to form the address in store from which the display control word is accessed.

The invention will now be more particularly described with reference to the accompanying drawings, in which:—

FIG. 1 discloses a display system, using a refresh buffer based on the above acknowledged prior art.

FIG. 2 discloses a display system using a colour number and position information for selecting a colour value from an output VLT according to the invention.

FIG. 3 shows the x and y address byte formats used in the system of Fig. 2.

FIG. 4 depicts an input VLT for incorporating externally supplied texture information into the colour number prior to insertion of the modified colour number into the refresh buffer.

FIG. 5a shows the subpattern tables whose selection is a function of the lowest order pel position address bits, extracted colour number, and superpattern selection signal;

FIG. 5b shows a typicaly 8 pel × 8 pel displayed pattern; and,

FIG. 5c depicts a superpattern as a function of higher order pel position address bits.

FIG. 6 shows an embodiment of texture display via a two level VLT pattern hierarchy.

FIG. 7 is an event activity diagram of selected display system elements as a function of time.

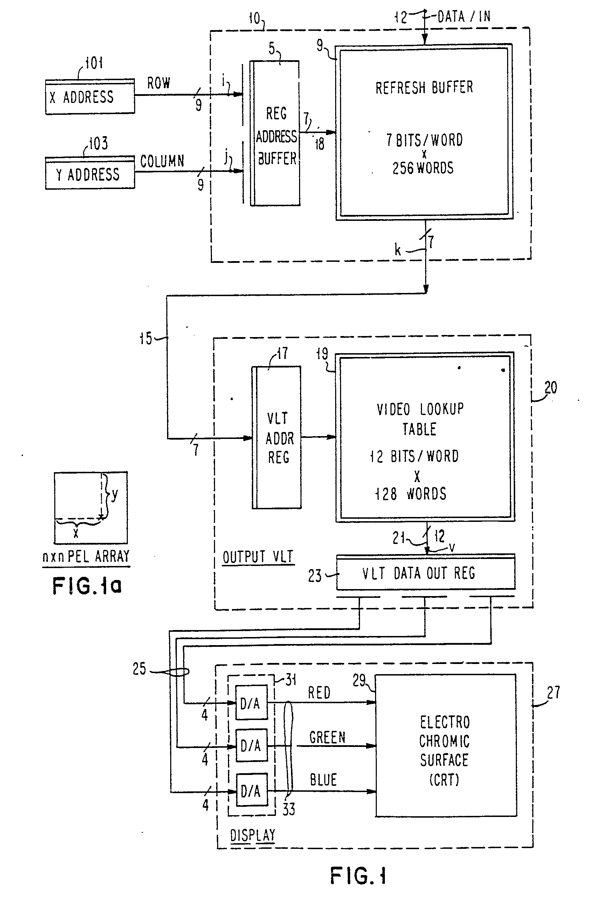

Referring now to Fig. 1 there is shown a raster scan colour graphics display system based on the above acknowledged prior art. Such systems include a buffer subsystem 10, operable in a read and write mode, for storing an image consisting of a matrix of colour numbers for subsequent presentation on the electrochromic surface 29 of display subsystem 27. Interposed between the buffer and display subsystem is a Video Look-Up Table 20 for translating each colour number k, fetched from memory 9 at the matrix x, y position coordinates previously accessed by address register 5, into a counterpart colour value v. Each colour value v is converted by digital to analog means 31 as intensities for the appropriate red, green, and blue electron guns illuminating the electrochromic surface 29. The double border on refresh buffer memory 9, and the Video Look-Up Tables (VLT) memory 19 denote both writeable and readable stores. Also, the single double border on registers and counters is indicative of the fact that they are edge triggered. They change state on the leading edge of a signal clock.

Buffer subsystem 10 comprises refresh buffer memory 9 capable of storing an image matrix of $2^9 \times 2^9$ pel positions. Each of the resulting 262,144 image memory pel locations is capable of storing at least 7 bits, termed a "colour number". Each buffer memory 9 location may be accessed by an 18 bit address furnished by address register 5 over path 7. When memory 9 is operated in the read mode the 7 bit colour number k is read out over path 15 to the VLT address register 17. Throughout this description, a cross hatch on a path with an adjacent number indicates the number of parallel conductors per path. Thus path 7 has 18 conductors while path 15 contains 7 conductors

A Video Look-Up Table is used to bridge the gap between the small number of colour number bits per pel (7) stored for each position in the refresh buffer memory 9 and the larger number of bits used for driving the red, green, and blue colour guns within the digital to analog converter 31 illuminating the display surface 29. The larger number of bits driving the colour guns consist of an equal number of bits for each gun and define the number of intensities for each colour. Thus, for each colour value of 12 bits, 4 bits are set aside for each colour intensity. The product of 16 levels of intensity for each of the 3 colours makes possible a total of 4096 unique real colours on the display surface.

Motivation for the use of plural memories and transformations arises from the very high cost of large fast refresh buffer memory arrays. This is reflected in the fact that the colour numbers available at any one time are usually much less than the 4096 colours capable of being displayed. The "mapping" of the colour number from the refresh buffer memory to the 12 bit real colour value viewed on the display surface is carried out by the VLT. In the VLT memory 19 there is a 12 bit colour value corresponding to each colour number. Significantly, the colour value is independent of the pel location. The same colour number from the refresh buffer is always transformed into the same 12 bit colour value driving the display surface. Thus, each colour number extracted from the refresh memory 9 is transferred over path 15 to the VLT address register 17. The 12 bit colour value corresponding to the colour number is extracted from memory 19 over path 21 and placed in output register 23. At the occurrence of the next clock signal three 4 bit combinations are applied to respective electron guns 31 over counterpart paths 25.

As previously mentioned, prior art systems generate solid colour shapes which are flat or textureless. For colours without texture, the same 12 bit colour value can be stored for the same colour number in each memory. However, it is an attribute of this invention that to generate colours with texture, one 12 bit colour can be stored in an odd scan line of the VLT and a different 12 bit colour in the corresponding address of an even scan line of a VLT. When the "textured area" is to be displayed, the same 7 bit colour number in the refresh buffer can deliver a different 12 bit colour to the display surface depending on whether it is an odd line or an even line. Similarly, vertical textured patterns can be generated by detecting pel bit times which correspond to columns and, for the same colour number, display one colour for even bit times and another colour for the odd bit times.

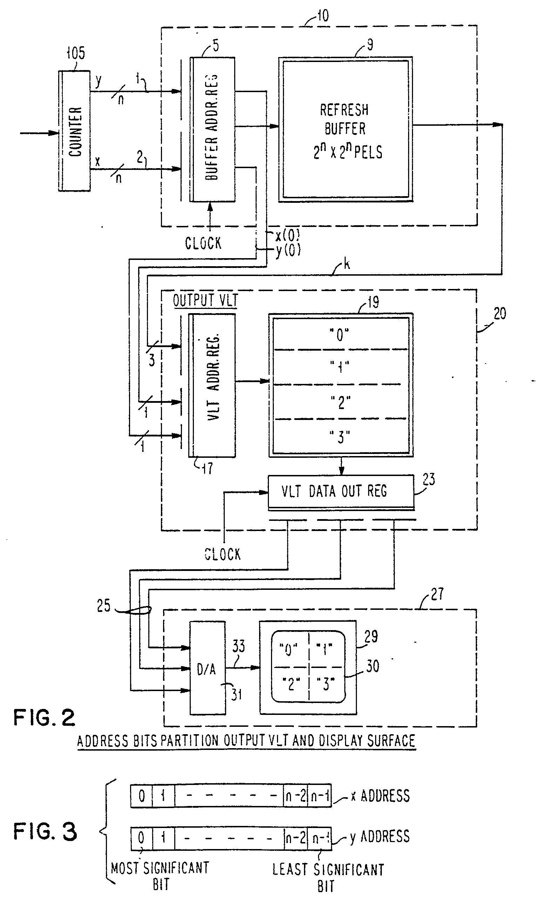

Referring now to Fig. 3 there is shown the byte format for the xy pel coordinates which serve also as address bytes for the refresh buffer memory 9. In this format, the leftmost or zero bit is the most significant while the rightmost or $n-1$ position denotes the least significant bit.

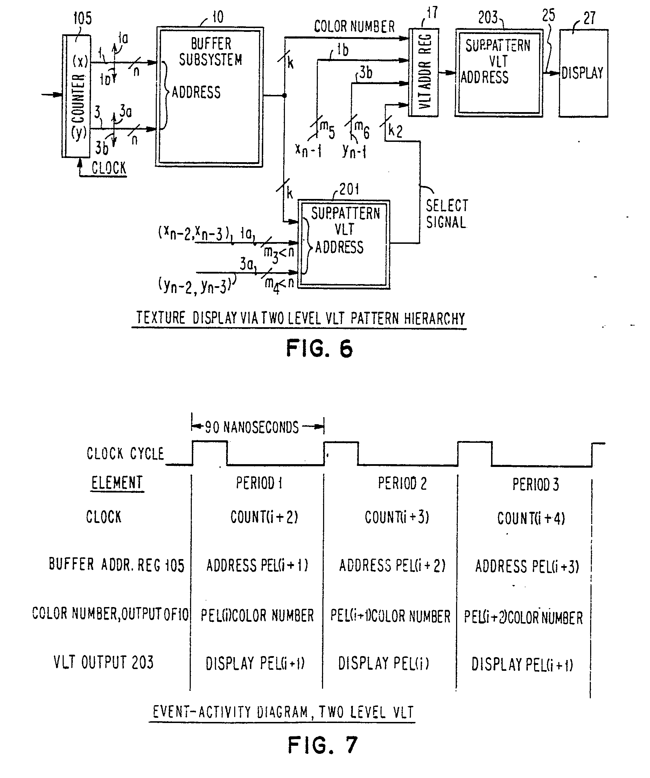

Referring now to Fig. 2, there is shown an embodiment of the invention in which the colour value in VLT memory 19 is selected as a function of the colour number from refresh memory 9 and the high order location bits $x_0$, $y_0$. All raster scan colour graphics display systems are synchronous, i.e., clock driven. To this extent an external clock drives counter 105. The counter output supplies the necessary change of consecutive address position to the edge triggered address register 5. From the output of register 5, the high order bits $x_0$ and $y_0$ are applied also to the input of VLT address register 17. It should be observed that counter 105, address registers 5, 17, and output register 23 are all clocked. The activities occurring during consecutive clock periods are set out in Fig. 6. The sequences of events shown in Fig. 6 applies to the embodiment shown in Figs. 2, 3 and 5.

Referring again to Fig. 2, VLT memory 19 is shown partitioned into arbitrary areas "0", "1", "2", "3". These areas correspond to predetermined portions 30 of display surface 29. It is clear, that the two high order bits $x_0$, $y_0$ can be used to designate the counterpart areas. The complete address is of course determined by the high order address bits together with colour number k from output register 13 of refresh buffer memory 9.

Referring to Fig. 7 when taken together with Fig. 2, it is clear that during a first clock period after counter 105 is incremented to count pel position $i+2$ buffer address register 5 is actually accessing the pel at location $i+1$ from buffer memory 9. Thus, the colour number k to be loaded into address register 17 at the end of the period represents the colour number for the pel at location $i+1$. Simultaneously, VLT address register 17 is accessing the real colour value v of pel i from memory 19, to be clocked into registers 23 at the end of the period. The last concurrent operation is that the colour value v being applied to display subsystem 27 in output register 23 is associated with the pel colour number at location $i-3$. In the next period the count is incremented by one over the previous period. In a system embodying the invention using edge triggered registers and counters changing state with the leading edge of the signal clock, a display surface of 512 pels per line requires a bit time in the order of 90 nanoseconds. The x value counts the column along the row and the y value denotes the row. For raster scan, x is incremented until the end of the row, when it returns to the first column, the row or y value is incremented. Thus, the n lowest order bits of counter 105 comprise the x pel address and the highest order n bits of counter 105 comprise the y address. Each pel position may be denoted by a single letter i, with it being understood to comprise both x and y.

The raster scanned colour graphics display system operates as suggested above in a pipeline of four stages. The functions are distributed such that (1) counter 105 counts up to the next pel address, (2) address register 5 holds the address for the refresh buffer memory 9, (3) address register 17 holds the colour number as an address for the VLT memory 19, and (4) VLT output register 23 holds the colour values for the digital to analog conversion necessary for pel colour display. Also, each stage should have no more than one pel time (e.g. 90 nanoseconds) of delay. For instance, the buffer memory access time plus the propagation delay of the address register 5 plus the setup time for colour value register 23 should be less than 90 nanoseconds.

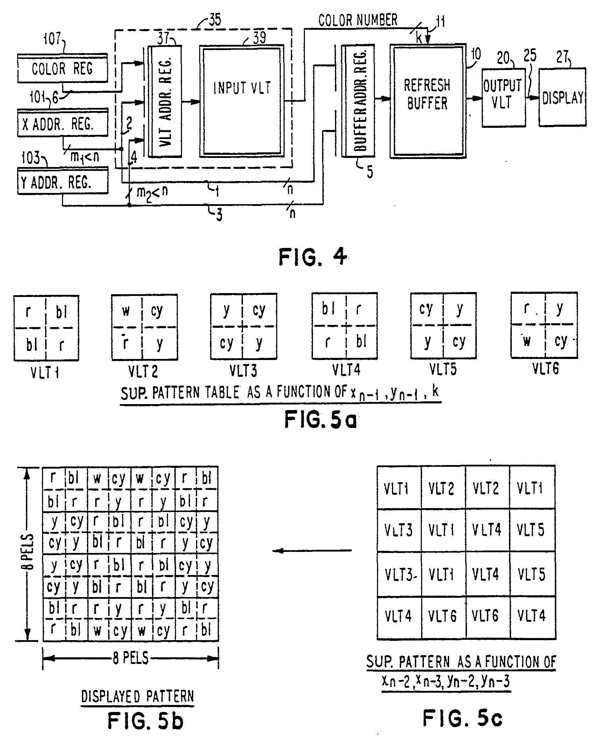

Referring now to Fig. 4, there is shown an alternative method and means for inserting texture information. The modification includes information inserting (writing) into the refresh buffer memory 10. This is implemented by the preloading of a colour register 107 until the value in the colour registers is changed. All vectors and characters placed in the refresh buffer memory take on that colour number resident in the colour register 107. Instead of simply loading the colour number from the colour register into the refresh buffer unaltered, this embodiment permits a "texture" pattern to be incorporated into the refresh buffer memory itself. Note that the colour number is a function of the contents of a colour register and a predetermined subset of address position bits applied through VLT address register 37 to VLT memory 39.

Referring now to Fig. 5b there is shown a display pattern of 8 × 8 pels which can be decomposed into a 4 cell × 4 cell "superpattern", as shown in Fig. 5c, where each cell is a 2 pel × 2 pel "subpattern". Instead of having to formulate a colour number in respect of 64 pels for the display pattern shown in Fig. 5c, a two stage selection procedure is invoked. In the example, the first stage involves superpattern selection of 1 of 6 subpatterns for each of the 16 "super" cells.

Referring now to Fig. 5a the subpattern tables are selected as a function of the address bits $x_{n-1}$, $y_{n-1}$ and colour number k. Six 4 pel subpatterns are shown. These are designated respectively VLT 1, VLT 2, ... VLT 6. In these tables "r" is red, "bl" is blue, "w" is white, "cy" is cyan, "y" is yellow. The patterns and the colours are meant to be illustrative and not exhaustive.

Referring now to Fig. 6, there is depicted the means for texture display via two level VLT selection pattern hierarchy employing superpattern and subpattern selection as described in connection with Figs. 5a, b, c. First, the colour number k is selected as a function of the x, y pel address applied to buffer subsystem 10. The super patterns are chosen from an address formed from the colour number k and the address bits $x_{n-2}$, $x_{n-3}$, $y_{n-2}$, $y_{n-3}$. In turn, the subpatterns are selected according to an address formed from the colour number k, the low order address bits $x_{n-1}$, $y_{n-1}$, and a select signal representing the superpattern or cell. These are applied to the display subsystem 27 over path 25 as a series of colour values.

The texture capability can also be used to achieve the effect of a finer gradation in colour. For example, consider a shade of red between the intensity levels 12 and 13. A shading illusion can be achieved by alternating red intensity 12 with intensity 13. The same technique can be employed in performing shading, where an area is to become progressively darker in one direction. Often, when changing from one intensity to the next lower level, there is a noticeable line. This line can be smoothed over by specifying a textured colour to the boundary area.

While there has been shown and described three embodiments in accordance with the present invention, it is understood that the invention is not limited thereto but is susceptible of numerous changes and modifications as are known to those skilled in the art.

## Claims

1. A method of forming a colour display of an original on the display surface of an electrochromic display device, which device is a CRT display device having an electrochromic surface, that is a surface capable of being illuminated by an electron gun, said method comprising sequentially accessing a refresher memory storing data representing the original and applying the output of the memory to address means for accessing a stored array of display control words, representing different colours and colour intensities and usable to control the display device, characterised by forming the addresses of the control words by combining at least part of the address of the respective display area pel with the data applied to the address means representing the corresponding original pel so that the selected control word depends both on the colour of the original pel and the position of the display area pel whereby the display has the appearance of texture or roughness rather than flat colour uniformity.

2. A method as claimed in claim 1, further characterised by using the respective addresses of the picture elements of the display surface as storage addresses for storing the data representing the corresponding picture elements of the original whereby the address of a display surface pel can be used to access the corresponding original pel data from the refresher memory.

3. A method as claimed in claim 1 or 2, further characterised by notionally dividing the array of display control words into the addressable segments, each comprising a multiplicity of words, using the picture element address to select the appropriate segment and using the accessed data to select the display control word within the selected segment.

4. A method as claimed in claim 1, 2 or 3, further characterised by establishing the table of display control words as two sub-arrays, the first sub-array (Fig. 5a) storing sub-words comprising values representing groups of picture elements of the original and the second sub-array (Fig. 5c) storing sub-words representing the groups of picture elements.

5. Apparatus capable of carrying out a method as claimed in any one of claims 1 to 4, said apparatus comprising an electrochemical display device (27), which device is a CRT display device having an electrochromic surface, that is a surface capable of being illuminated by an electron gun, controlled in operation by a sequence of display control words, each word determining the colour and intensity of a displayed pel; a refresher memory (9) for storing data representing the pel's of the original; means (105, 5) for reading out the pel data; a store (19) for storing an array of the display control words; and means (17) for accessing control words from the store (19) and for supplying the accessed control words to the display device (27), characterised in that the accessing means (17) comprise means for combining the original pel data read out from the refresher memory (9) with address data (x(0), y(0)) representing at least part of the address of the display pel to form the address in store (19) from which the display control word is accessed.

## Revendications

1. Méthode de commande pour l'affichage en couleur d'un original sur la surface d'affichage d'un dispositif d'affichage à tube cathodique CRT ayant une surface électrochromique, c'est-à-dire une surface pouvant être éclairée par un canon d'électrons, ladite méthode comprenant séquentiellement l'accès à une mémoire de rafraîchissement emmagasinant des données représentant l'original et l'application de la sortie de la mémoire à des moyens d'addressage pour accéder à un ensemble emmagasiné de mots de commande d'affichage représentant différentes. couleurs et intensités de couleur et utilisables pour commander le dispositif d'affichage, caractérisé par la formation des adresses des mots de commande en combinant au moins en partie l'adresse de données PEL de la zone d'affichage respective avec les données appliquées aux moyens d'adressage représentant l'élément PEL correspondant de l'original de sorte que le mot de commande sélectionné dépend à la fois de la couleur de l'élément PEL de l'original et de la position de l'élément PEL de la zone d'affichage, si bien que l'affichage a l'apparence d'une texture ou d'une rugosité et non pas d'une uniformité de couleur plate.

2. Méthode selon la revendication 1, caractérisée en outre par l'usage des adresses respectives des éléments d'image de la surface d'affichage comme adresses d'emmagasinage pour emmagasiner les données représentant les éléments d'image correspondants de l'original de sorte que l'adresse d'un élément PEL de la surface d'affichage puisse être utilisé pour avoir accès aux données PEL correspondantes de l'original provenant de la mémoire de rafraîchissement.

3. Méthode selon les revendications 1 ou 2, caractérisée en outre par une division avantageuse de l'ensemble des mots de commande d'affichage en segments adressables, comprenant chacun une multiplicité de mots, l'usage des données auxquelles il y a eu accès pour sélectionner le segment approprié, et l'usage des données auxquelles il y a eu accès pour sélectionner le mot de commande d'affichage dans le segment sélectionné.

4. Méthode selon les revendications 1, 2 ou 3, caractérisée en outre par l'établissement de la table de mots de commande d'affichage en deux sous-ensembles (figures 5a) le premier sous-ensemble emmagasinant des sous-mots constitués de valeurs représentant des groupes d'éléments d'image de l'original, et le second sous-ensemble (figure 5c) emmagasinant des sous-mots représentant les groupes d'éléments d'image.

5. Dispositif pouvant mettre en oeuvre une méthode selon l'une quelconque des revendications 1 à 4, ledit dispositif comprenant un dispositif d'affichage électrochromique (27), lequel dispositif est un dispositif d'affichage à tube cathodique CRT ayant une surface électrochromique, c'est-à-dire une surface pouvant être éclairée par un canon d'électrons, dont le fonctionnement est commandé par une séquence de mots de commande d'affichage, chaque mot déterminant la couleur et l'intensité d'un élément PEL affiché; une mémoire de rafraîchissement (9) pour emmagasiner des données représentant les éléments d'image PEL de l'original; des moyens (105, 5) pour lire les données PEL; une mémoire (19) pour emmagasiner un ensemble de mots de commande d'affichage; et des moyens (17) pour avoir accès aux mots de commande dans la mémoire (19) et pour appliquer les mots de commande auxquels il y a eu accès au dispositif d'affichage (27), caractérisé en ce que les moyens d'accès (17) comprennent des moyens pour combiner les données PEL de l'original extraites de la mémoire de rafraîchissement (9) avec les données d'adresse (x(0), y(0)) représentant au moinds en partie l'adresse de l'élément PEL de l'affichage afin de former l'adresse du mot de commande d'affichage dans la mémoire (19) dans laquelle il y a accès.

## Patentansprüche

1. Verfahren zur farbigen Anzeige eines Originals auf der Anzeigeoberfläche einer elektrochromen Anzeigervorrichtung, die aus einer Kathodenstrahlröhre mit elektrochromer Oberfläche besteht, also mit einer durch eine Elektronenbeschleunigungsanordnung beleuchtbaren Oberfläche, indem aufeinanderfolgend ein die Daten zur Wiedergabe des Originals speichernder Bildwiederholspeicher aufgerufen wird und der Speicherausgang zwecks Zugriffs zu einer gespeicherten Gruppe von Anzeige-Steuerworten, die unterschiedliche Farben sowie Farbintensitäten darstellen, auf zur Anzeigevorrichtungs-Steuerung dienende Adressierungsmittel übertragen wird, dadurch gekennzeichnet, daß die Adressen der Steuerworte durch Kombination von zumindest einem Adressenteil des betreffenden Anzeigeflächen-Bildpunktes mit den auf die Adressierungsmittel übertragenen Daten gebildet werden, welche den entsprechenden ursprünglichen Bildpunkt wiedergeben, so daß das ausgewählte Steuerwort sowohl von der Farbe des ursprünglichen Bildpunktes als auch von der Lage des Anzeigeflächen-Bildpunktes abhängt, wobei die Anzeige strukturiert oder rauh anstatt in eintöniger Farbgleichmäßigkeit erscheint.

2. Verfahren nach Anspruch 1, weiterhin dadurch gekennzeichnet, daß die betreffenden Adressen der Bildpunkte der Anzeigeoberfläche als Speicheradressen zum Speichern der entsprechende Bildpunkte des Originals darstellenden Daten herangezogen werden, wobei die Adresse eines Anzeigeoberfläche-Bildpunktes dazu dienen kann, den Zugriff zu entsprechenden Daten des Original-Bildpunktes im Bildwiederholspeicher zu gestatten.

3. Verfahren nach Anspruch 1 oder 2, weiterhin dadurch gekennzeichnet, daß die Gruppe der Anzeige-Steuerworte begrifflich in adressierbare Segmente aufgeteilt wird, wovon jedes eine Vielzahl von Worten umfaßt, indem die Bildpunktadresse zur Auswahl des bestimmten Segments herangezogen wird und die zugegriffenen Daten zur Auswahl des Anzeige-Steuerwortes innerhalb des ausgewählten Segmentes dienen.

4. Verfahren nach Anspruch 1, 2 oder 3, weiterhin dadurch gekennzeichnet, daß die Tabelle der Anzeige-Steuerworte in Form zweier Untergruppen aufgestellt wird, wobei die erste Untergruppe (Fig. 5a) Unterbegriffe speichert, die Gruppen von Bildpunkte des Originals darstellenden Werten enthalten, und die zweite Untergruppe (Fig. 5c) Unterbegriffe speichert, die Gruppen von Bildpunkten darstellen.

5. Anordnung zur Durchführung des in einem der Ansprüche 1 bis 4 beanspruchten Verfahrens, welche eine elektrochrome Anzeigevorrichtung (27), die aus einer Kathodenstrahlanzeigeanordnung mit einer elektrochromen Oberfläche, also mit einer durch eine Elektronenbeschleunigungsanordnung beleuchtbarten Oberfläche, besteht und die bei Betrieb mittels einer Folge von Anzeige-Steuerworten angesteuert wird, wobei jedes Wort Farbe und Intensität eines angezeigten Bildpunktes bestimmt, welche einen Bildwiederholspeicher (9) zur Speicherung der die Bildpunkte des Originals darstellenden Daten, welche Mittel (105, 5) zum Auslesen der Bildpunktdaten, welche Speicher (19) zum Speichern einer Gruppe von Anzeige-Steuerworten und welche Mittel (17) zum Zugriff zu den Steuerworten des Speichers (19) sowie zur Übertragung der zugegriffenen Steuerworte auf die Anzeigevorrichtung (27) enthält, dadurch gekennzeichnet, daß die Zugriffsmittel (17) Maßnahmen zum Kombinieren der vom Bildwiederholspeicher (9) ausgelesenen Daten der Original-Bildpunkte mit Adreßdaten (x(0), y(0)) enthalten, die zumindest einen Adreßteil der Anzeige-Bildpunkte darstellen, um die Adresse im Speicher (19) zum Zugriff des Anzeige-Steuerwortes zu bilden.

FIG.1a

n x n PEL ARRAY

FIG.1

FIG. 2

ADDRESS BITS PARTITION OUTPUT VLT AND DISPLAY SURFACE

FIG. 3

MOST SIGNIFICANT BIT    LEAST SIGNIFICANT BIT

**0 012 420**

**FIG. 4**

VLT1    VLT2    VLT3    VLT4    VLT5    VLT6

SUP. PATTERN TABLE AS A FUNCTION OF $x_{n-1}, y_{n-1}, k$

**FIG. 5a**

DISPLAYED PATTERN

**FIG. 5b**

| VLT1 | VLT2 | VLT2 | VLT1 |
|------|------|------|------|
| VLT3 | VLT1 | VLT4 | VLT5 |
| VLT3- | VLT1 | VLT4 | VLT5 |
| VLT4 | VLT6 | VLT6 | VLT4 |

SUP. PATTERN AS A FUNCTION OF
$x_{n-2}, x_{n-3}, y_{n-2}, y_{n-3}$

**FIG. 5c**

3

TEXTURE DISPLAY VIA TWO LEVEL VLT PATTERN HIERARCHY

## FIG. 6

| ELEMENT | PERIOD 1 | PERIOD 2 | PERIOD 3 |
|---|---|---|---|
| CLOCK | COUNT(i + 2) | COUNT(i + 3) | COUNT(i + 4) |
| BUFFER ADDR. REG 105 | ADDRESS PEL(i + 1) | ADDRESS PEL(i + 2) | ADDRESS PEL(i + 3) |
| COLOR NUMBER, OUTPUT OF 10 | PEL(i)COLOR NUMBER | PEL(i + 1)COLOR NUMBER | PEL(i + 2)COLOR NUMBER |
| VLT OUTPUT 203 | DISPLAY PEL(i + 1) | DISPLAY PEL(i) | DISPLAY PEL(i + 1) |

EVENT−ACTIVITY DIAGRAM, TWO LEVEL VLT

## FIG. 7